# EUROPEAN PATENT APPLICATION

(11) **EP 4 593 127 A1**
(43) Date of publication of application: **30.07.2025**
(21) Application number: 23868404.7
(22) Date of filing: 22.08.2023
(51) Int. Cl.: H01M 8/04014, H01M 8/04089, H01M 8/0612, C01B 3/34

(54) **AIR AND FUEL SUPPLY MODULE, AND FUEL CELL SYSTEM COMPRISING SAME**

(30) Priority: 21.09.2022 KR 20220119051
(71) Applicant: Mico Power Ltd., Anseong-si, Gyeonggi-do 17567 (KR)
(72) Inventor: LEE, Jun Woo, Anseong-si Gyeonggi-do 17543 (KR); CHOI, Seong Ho, Anseong-si Gyeonggi-do 17543 (KR)
(74) Representative: Mewburn Ellis LLP
(86) International application number: PCT/KR2023/012386
(87) International publication number: WO 2024/063347

(57) **Abstract**

A fuel cell system is disclosed. The fuel cell system includes a fuel cell stack that generates electrical energy by reacting oxygen and hydrogen; a fuel reforming module that generates hydrogen-containing reformed fuel gas by steam-reforming hydrocarbon fuel; a combustor that combusts unreacted fuel gas discharged from the fuel cell stack; and an air/fuel supply module that heats air supplied from an external air supply source by using the high-temperature combustion gas supplied from the combustor and heat-exchanges the air with reformed fuel gas supplied from the fuel reforming module to reduce a temperature difference therebetween, and supplies the reformed fuel gas and the air after the heat exchange to the fuel cell stack.

## Description

### Technical Field

The present invention relates to a module that supplies air and fuel to a fuel cell stack and a fuel cell system including the same.

### Background Art

A fuel cell generates electricity by using a reaction of hydrogen and oxygen. Such fuel cell is the most efficient when using hydrogen directly, but installing a hydrogen storage tank directly in a place where the fuel cell is installed causes many safety problems. Therefore, hydrocarbon fuel is currently reformed to generate hydrogen and used as fuel for a fuel cell. As a method of reforming such hydrocarbon fuel, a steam reforming method of generating hydrogen by reacting steam and hydrocarbon fuel is mainly used.

Meanwhile, in a high-temperature operating fuel cell system, such as a solid oxide fuel cell (SOFC) or a molten carbonate fuel cell (MCFC), it is necessary to heat fuel gas and air to a certain temperature or higher and supply the heated fuel and air to a fuel cell module to improve the electricity generation efficiency and to stably operate the system.

In such a fuel cell system, a technology is required to stably supply the fuel cell stack with reformed fuel gas and air in which heat balance is adjusted to have a small temperature deviation.

### Disclosure of Invention

### Technical Problem

One objective of the present invention is to provide an air and fuel supply module capable of supplying a fuel cell stack with air and fuel with a small temperature deviation.

Another objective of the present invention is to provide a fuel cell system including an air and fuel supply module.

### Solution to Problem

A fuel cell system according to an embodiment of the present invention includes a fuel cell stack that generates electrical energy by reacting oxygen and hydrogen; a fuel reforming module that generates hydrogen-containing reformed fuel gas by steam-reforming hydrocarbon fuel; a combustor that combusts unreacted fuel gas discharged from the fuel cell stack; and an air/fuel supply module that heats air supplied from an external air supply source by using the high-temperature combustion gas supplied from the combustor and heat-exchanges the air with reformed fuel gas supplied from the fuel reforming module to reduce a temperature difference therebetween, and supplies the reformed fuel gas and the air after the heat exchange to the fuel cell stack.

In one embodiment, the fuel cell system may further include a vaporizer that is arranged adjacent to the combustor and converts water into steam by using the high-temperature combustion gas and supplies the steam to the fuel reforming module.

In one embodiment, the fuel reforming module may include a mixer that is arranged adjacent to the vaporizer and receives hydrocarbon fuel and steam respectively from an external fuel source and the vaporizer and mixes the hydrocarbon fuel with the steam; a fuel heat exchanger that is arranged above the mixer and receives the mixed fuel gas supplied from the mixer and exchanges and heating the mixed fuel gas with unreacted fuel gas or air discharged from the fuel cell stack; and a reformer that reforms the heated mixed fuel gas to generate the reformed fuel gas and supplies the reformed fuel gas to the air/fuel supply module.

In one embodiment, the air/fuel supply module may include a preheating unit that is arranged above the vaporizer and preheats the air supplied from the air supply source; a heating unit that is arranged above the combustor and heats preheated air supplied from the preheating unit by using high-temperature combustion gas supplied from the combustor; and a heat balance adjustment unit that is arranged adjacent to the heating unit and induces heat exchange between heated air supplied from the heating unit and reformed fuel gas supplied from the fuel reforming module to reduce a temperature difference therebetween, and the preheating unit may preheat air supplied from the air supply source through heat exchange with the high-temperature combustion gas provided via the heating unit.

In one embodiment, the heat balance adjustment unit may include a third storage container having an internal space; fifth and sixth partition walls arranged inside the internal space of the third storage container to divide the internal space into a seventh space and an eighth space spaced apart from each other and a ninth space placed therebetween; and at least one third air movement pipe coupled to the fifth and sixth partition walls to be placed across the ninth space and connecting the seventh space to the eighth space, air heated by the heating unit may be supplied to the seventh space and moves to the eighth space through the third air movement pipe, and the reformed fuel gas may be supplied to the ninth space.

In one embodiment, the heat balance adjustment unit may further include a reformed fuel supply pipe that connects the ninth space to the fuel reforming module; a fuel discharge pipe that connects the ninth space to an anode path inside the fuel cell stack; and an air discharge pipe that connects the eighth space to a cathode path inside the fuel cell stack.

In one embodiment, the heat balance adjustment unit may further include at least one second baffle arranged in the ninth space to increase a length of a movement path of the reformed fuel gas.

In one embodiment, the heating unit may include a second storage container arranged adjacent to the third storage container and having an internal space; third and fourth partition walls arranged in the internal space of the second storage container to divide the internal space into a fourth space and a fifth space, which are spaced apart from each other and respectively placed adjacent to the eighth space and the seventh space and a sixth space placed therebetween and above the combustor; and at least one second air movement pipe coupled to the third and fourth partition walls to cross the sixth space and connecting the fourth space to the fifth space, a first opening, into which a flame and high-temperature combustion gas generated by the combustor are introduced, may be formed on a bottom surface of the second storage container corresponding to the sixth space and, and air preheated in the preheating unit may be supplied to the fourth space, moves to the fifth space through the second air movement pipe and supplied to the seventh space of the third storage container.

In one embodiment, the air/fuel supply module may further include a second connection unit coupled to the second and third storage containers to connect the fifth space to the seventh space.

In one embodiment, the combustor may include an outer case open to an upper portion and a combustion device arranged inside the outer case, and the outer case may be coupled to the second storage container to connect the sixth space to the internal space by the first opening.

**In** one embodiment, the preheating unit may include a first storage container arranged adjacent to the second storage container and having an internal space; first and second partition walls arranged inside the internal space of the first storage container to divide the internal space into a first space and a second space spaced apart from each other and respectively placed adjacent to the fifth space and the sixth space, and a third space placed therebetween and above the vaporizer; and at least one first air movement pipe coupled to the first and second partition walls to be placed across the third space, and connecting the first space to the second space, air from the air supply source may be supplied to the first space and move to the second space through the first air movement pipe and be supplied to the fourth space of the second storage container, and the high-temperature combustion gas may be supplied to the third space.

**In** one embodiment, the air/fuel supply module may further include a first connection unit coupled to the first and second storage containers to connect the fourth space of the second storage container to the second space of the first storage container.

**In** one embodiment, the air/fuel supply module may further include a third connection unit coupled to the first and second storage containers to connect the third space to the sixth space, a second opening may be formed in a bottom surface of the first storage container corresponding to the third space, and the vaporizer may include a container having an internal space connected to the third space through the second opening, and a vaporization pipe arranged inside the container.

**In** one embodiment, the preheating unit may further include at least one first bevel arranged in the third space to increase a length of a movement path of the high-temperature combustion gas.

An air and fuel gas supply module according to an embodiment of the present invention is a module for supplying the air and the reformed fuel gas to a fuel cell stack, and includes a preheating unit that preheats air supplied from an air supply source; a heating unit that is arranged above a combustor for generating high-temperature combustion gas and heats the preheated air supplied from the preheating unit by using the high-temperature combustion gas supplied from the combustor; and a heat balance adjustment unit that is arranged adjacent to the heating unit and induces heat exchange between the heated air supplied from the heating unit and reformed fuel gas supplied from the fuel reforming module to reduce a temperature difference therebetween, wherein the preheating unit preheats air supplied from the air supply source through heat exchange with the high-temperature combustion gas provided via the heating unit, the heat balance adjustment unit includes: a third storage container having an internal space; fifth and sixth partition walls arranged inside the internal space of the third storage container and dividing the internal space into a seventh space and an eighth space spaced apart from each other and a ninth space placed therebetween; and at least one third air movement pipe coupled to the fifth and sixth partition walls to be placed across the ninth space and connecting the seventh space to the eighth space, air heated by the heating unit is supplied to the seventh space and moves to the eighth space through the third air movement pipe, and the reformed fuel gas is supplied to the ninth space.

In one embodiment, the heat balance adjustment unit may further include a reformed fuel supply pipe connecting the ninth space to the fuel reforming module; a fuel discharge pipe connecting the ninth space to an anode path inside the fuel cell stack; and an air discharge pipe connecting the eighth space to a cathode path inside the fuel cell stack.

In one embodiment, the heat balance adjustment unit may further include at least one second baffle arranged in the ninth space to increase a length of a movement path of the reformed fuel gas.

In one embodiment, the heating unit may include a second storage container arranged adjacent to the third storage container and having an internal space; third and fourth partition walls arranged in the internal space of the second storage container to divide the internal space into a fourth space and a fifth space, which are spaced apart from each other and respectively placed adjacent to the eighth space and the seventh space and a sixth space placed therebetween and above the combustor; and at least one second air movement pipe coupled to the third and fourth partition walls to cross the sixth space and connecting the fourth space to the fifth space, a first opening may be formed which is formed on a bottom surface of the second storage container corresponding to the sixth space and into which a flame and high-temperature combustion gas generated by the combustor are introduced, and air preheated in the preheating unit may be supplied to the fourth space, moves to the fifth space through the second air movement pipe and be supplied to the seventh space of the third storage container.

In one embodiment, the preheating unit may include a first storage container arranged adjacent to the second storage container and having an internal space; first and second partition walls arranged inside the internal space of the first storage container to divide the internal space into a first space and a second space spaced apart from each other and respectively placed adjacent to the fifth space and the sixth space, and a third space placed therebetween and above the vaporizer; and at least one first air movement pipe coupled to the first and second partition walls to be placed across the third space, and connecting the first space to the second space, air from the air supply source may be supplied to the first space, moves to the second space through the first air movement pipe and be supplied to the fourth space of the second storage container, and the high-temperature combustion gas may be supplied to the third space.

In one embodiment, the preheating unit may further include at least one first bevel arranged in the third space to increase a length of a movement path of the high-temperature combustion gas.

In one embodiment, the air and fuel gas supply module may further include a first connection unit coupled to the first and second storage containers to connect the fourth space of the second storage container to the second space of the first storage container; a second connection unit coupled to the second and third storage containers to connect the fifth space to the seventh space; and a third connection unit coupled to the first and second storage containers to connect the third space to the sixth space.

In one embodiment, a second opening is formed that connects an internal space of a container of the vaporizer to the third space may be formed on a bottom surface of the first storage container corresponding to the third space.

### Advantageous Effects of Invention

According to the fuel cell system of the present invention, not only can the thermal efficiency be improved by optimizing the arrangement of the fuel reforming module 1200, the air/fuel supply module, the combustor, and the vaporizer, but also the power generation efficiency and stability of the fuel cell stack 1100 can be significantly improved since the air and reformed fuel, which are thermally balanced, are supplied to the fuel cell stack through the air/fuel supply module.

### Brief Description of Drawings

FIG. 1 is a diagram illustrating a fuel cell system according to an embodiment of the present invention.
FIG. 2 is a conceptual diagram illustrating positional relationships between a fuel reforming module, an air and fuel supply module, a burner, and a vaporizer illustrated in FIG. 1.
FIG. 3 is a diagram illustrating a fuel reforming module illustrated in FIG. 1 and FIG. 2.
FIG. 4 is a cross-sectional view illustrating an interaction of an air and fuel supply module, a burner, and a vaporizer illustrated in FIG. 1 and FIG. 2.
FIG. 5A is a cross-sectional view illustrating an air and fuel supply module illustrated in FIG. 1, FIG. 2, and FIG. 4, and FIG. 5B and FIG. 5C are cross-sectional views respectively illustrating an air preheating unit and a heat balance adjustment unit of the air and fuel supply module.

### Best Mode for Carrying out the Invention

Hereinafter, embodiments of the present invention are described in detail with reference to the attached drawings. Since the present invention can be variously changed and take various forms, specific embodiments are illustrated in the drawings, and the present invention is described in detail in the specification. However, this is not intended to limit the present invention to a specific disclosure form and should be understood to include all changes, equivalents, and substitutes included in the idea and technical scope of the present invention. While describing respective drawings, similar reference numerals are used for similar components. In the attached drawings, the dimensions of structures are enlarged more than actual sizes for the sake of clarity of the present invention.

The terms, first, second, and so on, can be used to describe various components, but the components should not be limited by the terms. The terms are used only for the purpose of distinguishing one component from another component. For example, the first component can be referred to as the second component without departing from the scope of the present invention, and similarly, the second component can also be referred to as the first component.

Terms used in the present disclosure are only used to describe specific embodiments and are not intended to limit the present invention. The singular expression includes the plural expression unless the context clearly indicates otherwise. In the present disclosure, terms, such as "comprise", "include", or "have" are intended to designate the presence of features, steps, operations, configurations, components, or combinations thereof described in the present disclosure, and should be understood that the terms do not exclude in advance the presence or possibility of addition of one or more other features, steps, operations, configurations, components, or combinations thereof.

Unless otherwise defined, all terms used herein, including technical or scientific terms, have the same meaning as commonly understood by those skilled in the art to which the present invention pertains. Terms that are commonly used and defined in the dictionary should be interpreted as having a meaning consistent with the meaning in the context of the related technology, and should not be interpreted in an ideal or excessively formal sense unless clearly defined in the present invention.

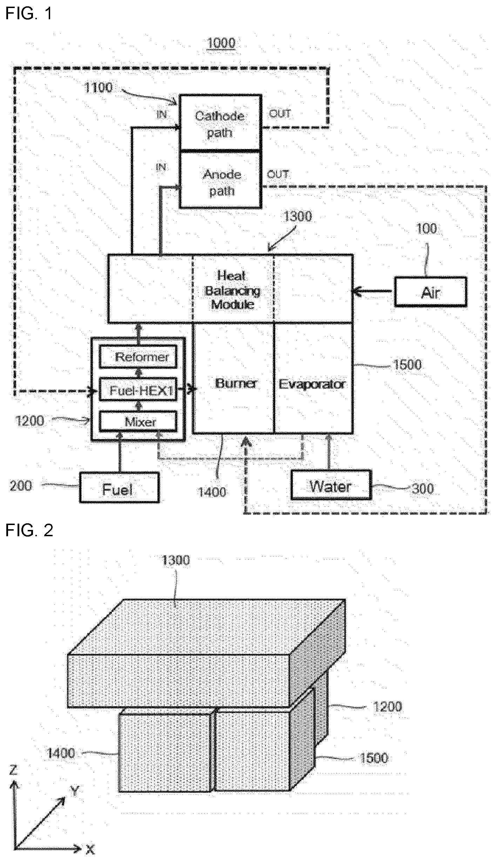

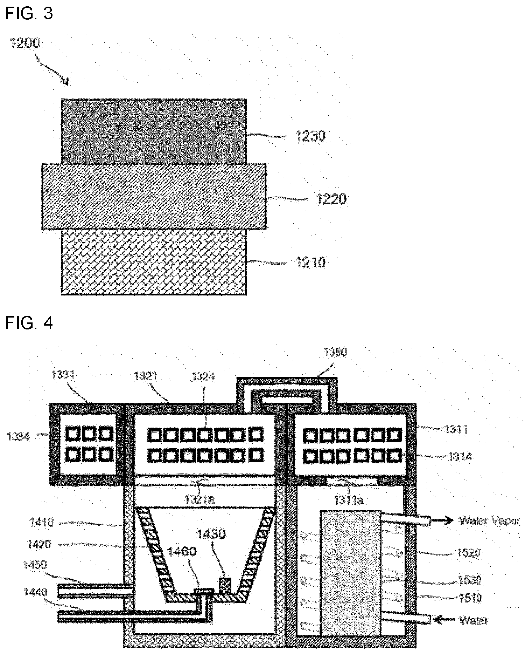

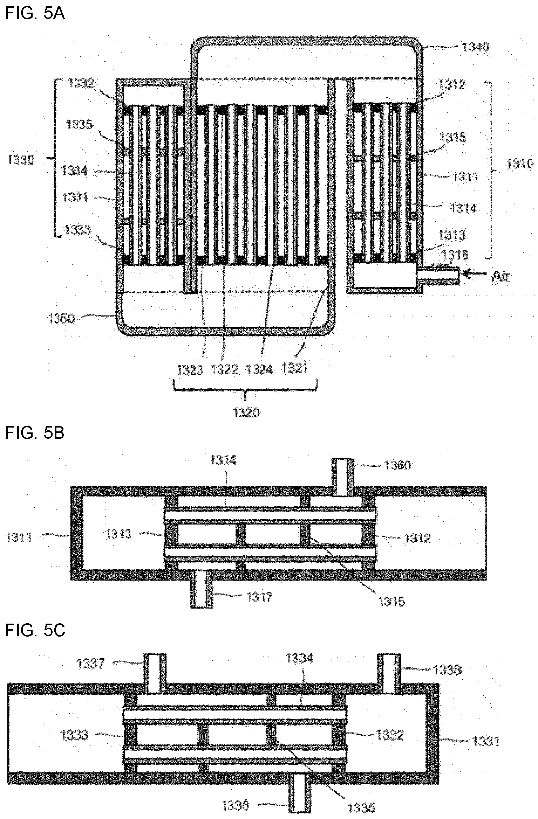

FIG. 1 is a diagram illustrating a fuel cell system according to an embodiment of the present invention, FIG. 2 is a conceptual diagram illustrating positional relationships between a fuel reforming module, an air and fuel supply module, a burner, and a vaporizer illustrated in FIG. 1, FIG. 3 is a diagram illustrating a fuel reforming module illustrated in FIG. 1 and FIG. 2, FIG. 4 is a cross-sectional view illustrating an interaction of an air and fuel supply module, a burner, and a vaporizer illustrated in FIG. 1 and FIG. 2, FIG. 5A is a cross-sectional view illustrating an air and fuel supply module illustrated in FIG. 1, FIG. 2, and FIG. 4, and FIG. 5B and FIG. 5C are cross-sectional views respectively illustrating an air preheating unit and a heat balance adjustment unit of the air and fuel supply module. FIG. 4 is a cross-sectional view along an XZ plane of FIG. 2, FIG. 5A is a cross-sectional view along an XY plane of FIG. 2, and FIG. 5B and FIG. 5C are cross-sectional views along a YZ plane.

Referring to FIG. 1 to FIG. 4 and FIG. 5A to FIG. 5C, a fuel cell system 1000 according to an embodiment of the present invention can include a fuel cell stack 1100, a fuel reforming module 1200, an air/fuel supply module 1300, a combustor 1400, and a vaporizer 1500. In one embodiment, the fuel reforming module 1200, the air/fuel supply module 1300, the combustor 1400, and the vaporizer 1500 can be arranged inside a hot box (not illustrated) in which spaces therebetween are filled with insulating materials.

The fuel cell stack 1100 can include a plurality of single cells that generate electric energy by using oxygen in the air and hydrogen in the reformed fuel gas. The plurality of single cells can each include an anode, a cathode, and an electrolyte therebetween, and when fuel gas including hydrogen (H₂) and air including oxygen (O₂) are respectively supplied to the anode and the cathode, oxygen ions (O²⁻) reduced by the cathode move to the anode via the electrolyte, and the oxygen ions (O²⁻) moved to the anode react with hydrogen (H₂) provided to the anode to generate water (H₂O) and electrons (e⁻), and the plurality of single cells can generate electric energy by using the electrons generated through the reaction as described above. The reaction of the oxygen and hydrogen is an exothermic reaction, and the fuel cell stack 1100 can release heat during a power generation mode in which electric energy is generated.

The fuel cell stack 1100 can include a solid oxide fuel cell (SOFC) or a molten carbonate fuel cell (MCFC) that operates at a temperature of about 500°C or higher. Meanwhile, the fuel cell stack 1100 can also include a stack of flat-type single cells, or a bundle of tubular or flat-tubular single cells.

The fuel reforming module 1200 can steam-reform the fuel supplied from an external fuel supply source 200 and supply the reformed fuel to the air/fuel supply module 1300. At this time, the fuel supplied from the fuel supply source 200 can be a hydrocarbon fuel chemically containing hydrogen, such as methane (CH₄), ethane (C₂H₆), propane (C₃H₈), butane (C₄H₁₀), natural gas, or coal gas. The fuel reforming module 1200 can be arranged adjacent to the air/fuel supply module 1300, the combustor 1400, and the vaporizer 1500 to minimize heat loss.

In one embodiment, the fuel reforming module 1200 can include a mixer 1210, a fuel heat exchanger 1220, and a reformer 1230.

The mixer 1210 is arranged adjacent to the vaporizer 1500 and can receive hydrocarbon fuel gas and steam from an external fuel supply source 200 and the vaporizer 1500, mix the hydrocarbon fuel gas with the steam, and provide the mixed fuel gas to the fuel heat exchanger 1220. As long as the fuel gas and steam can be mixed together, a structure of the mixer 1210 is not limited in particular, and a known fuel gas and steam mixing structure for a fuel cell can be applied without limitation.

The fuel heat exchanger 1220 can be arranged above the mixer 1210 and can receive a mixed fuel gas, in which the fuel gas is mixed with the steam, from the mixer 1210, heat the mixed fuel gas, and supply the mixed fuel gas to the reformer 1230. **In** one embodiment, the fuel heat exchanger 1220 can be supplied with high-temperature unreacted fuel gas or air discharged from the fuel cell stack 1100, and the mixed fuel gas can be heated through heat exchange with the high-temperature unreacted fuel gas or air. The structure of the fuel heat exchanger 1220 is not limited in particular, and a known heat exchanger structure for a fuel cell can be applied without limitation.

The reformer 1230 is arranged above the fuel heat exchanger 1220, and can generate hydrogen from at least a part of the fuel gas through a steam reforming reaction as represented in Reaction formula 1 below, and can supply the reformed fuel gas to the air/fuel supply module 1300.

[Reaction formula 1] 3CH₄ + 4H₂O → 10H₂ + 2CO + CO₂

A structure of the reformer 1230 is not limited in particular, and a known steam reformer can be applied without limitation.

The air/fuel supply module 1300 heats the air supplied from an external air supply source 100, and adjusts heat balance through heat exchange between the heated air and the reformed fuel gas supplied from the fuel reforming module 1200, and then supplies the air and reformed fuel gas with adjusted heat balance respectively to a cathode path and an anode path inside the fuel cell stack 1100.

In one embodiment, the air/fuel supply module 1300 can include a preheating unit 1310, a heating unit 1320, and a heat balance adjustment unit 1330. Meanwhile, the air/fuel supply module 1300 can further include a first connection unit 1340, a second connection unit 1350, and a third connection unit 1360.

The preheating unit 1310 can be connected to the external air supply source 100 to receive cold air and can preheat the cold air through heat exchange.

In one embodiment, the preheating unit 1310 can include a first storage container 1311, first and second partition walls 1312 and 1313, at least one first air movement pipe 1314, and at least one first baffle 1315.

The first storage container 1311 can have an internal space, and the first and second partition walls 1312 and 1313 can be arranged inside the internal space of the first storage container 1311 to divide the internal space into first and second spaces spaced apart from each other and a third space therebetween. At this time, the third space can be sealed with the first and second spaces, and the first space, the third space, and the second space can be placed in a row along a second direction Y.

The at least one first air movement pipe 1314 can be arranged to pass through the first and second partition walls 1312 and 1313 across the third space, and the first space can be connected to the second space by the first air movement pipe 1314. **In** one embodiment, the at least one first air movement pipe 1314 can extend in the second direction Y.

An air injection pipe 1316 connected to the external air supply source 100 can be connected to the first space, and cold air supplied through the air injection pipe 1316 can move to the second space through the air movement pipe 1314.

As illustrated in FIG. 4, high-temperature combustion gas introduced from the combustor 1400 into the internal space of the heating unit 1320 through the third connection unit 1360 can be introduced to the third space, and the air moving through the first air movement pipe 1314 can be preheated through heat exchange with the high-temperature combustion gas introduced into the third space through the third connection unit 1360. At this time, in order to increase a length of a movement path of the high-temperature combustion gas within the third space, the at least one first baffle 1315 can be arranged in the third space.

Meanwhile, the vaporizer 1500 can be arranged below the preheating unit 1310, and in order to allow the high-temperature combustion gas introduced into the third space to move to the vaporizer 1500, an opening 1311a can be formed on a part of a bottom surface of the first storage container 1311, which corresponds to the third space, to connect an internal space of a container 1510 of the vaporizer 1500 to the third space. In this case, thermal energy of the high-temperature combustion gas introduced into the internal space of the container 1510 of the vaporizer 1500 can be used as energy for converting water into steam. Meanwhile, in order to ensure sufficient heat exchange between the high-temperature combustion gas and the air moving through the first air movement pipe 1314, the opening 1311a of the first storage container 1311 can be formed to be relatively far away from a portion where the third connecting unit 1360 is connected.

The heating unit 1320 can receive the air preheated by the preheating unit 1310, and then heat the air by using the flame or high-temperature combustion gas of the combustor 1400.

In one embodiment, the heating unit 1320 can include a second storage container 1321, third and fourth partition walls 1322 and 1323, and at least one second air movement pipe 1324.

The second storage container 1321 can be arranged adjacent to the first storage container 1311 and can have an internal space. The third and fourth partition walls 1322 and 1323 can be arranged inside an internal space of the second storage container 1321 to divide the internal space into fourth and fifth spaces spaced apart from each other and a sixth space therebetween. At this time, the sixth space can be sealed with the fourth and fifth spaces, and the fourth space, the sixth space, and the fifth space can be placed in a row along the second direction Y.

The at least one second air movement pipe 1324 can be arranged to pass through the third and fourth partition walls 1322 and 1323 across the sixth space, and the fourth space can be connected to the fifth space by the second air movement pipe 1324. **In** one embodiment, the at least one second air movement pipe 1324 can extend in the second direction Y.

The fourth space can be connected to the second space of the first storage container 1311 of the preheating unit by the first connection unit 1340, and the air preheated by the preheating unit 1310 can move to the fourth space through the first connection unit 1340, and the air in the fourth space can move to the fifth space through the second air movement pipe 1324. Meanwhile, as long as the second space of the first storage container 1311 can be connected to the fourth space of the second storage container 1321, the structure of the first connection unit 1340 is not limited in particular.

Meanwhile, the combustor 1400 can be arranged at the bottom of the sixth space, and an opening 1321a can be formed on a bottom surface of the second storage container 1321 corresponding to the sixth space to expose the second air movement pipe 1324 to the combustor 1400 such that the flame and high-temperature combustion gas generated by the combustor 1400 can heat the air moving inside the second air movement pipe 1324. In one embodiment, the opening 1321a of the second storage container 1321 can be formed to expose an entirety of the sixth space to the combustor 1400.

Meanwhile, as described above, the third connecting unit 1360 can connect the sixth space of the second storage container 1321 to the third space of the first storage container 1311. In one embodiment, the third connecting unit 1360 can have a tube structure coupled to the first and second storage containers 1311 and 1321 to connect the third space to the sixth space.

In one embodiment, the second storage container 1321 can also be arranged to be spaced apart from the first storage container 1311 as illustrated in FIG. 5A, or unlike this, can also be arranged to be in contact with the first storage container 1311.

The heat balance adjustment unit 1330 can adjust the heat balance by inducing heat exchange between the heated air supplied from the heating unit 1320 and the reformed fuel supplied from the fuel reforming module 1200, thereby reducing a temperature difference between the air and the reformed fuel, and can supply the air and reformed fuel with the adjusted heat balance respectively to the cathode path and the anode path inside the fuel cell stack 1100.

In one embodiment, the heat balance adjustment unit 1330 can include a third storage container 1331, fifth and sixth partition walls 1332 and 1333, at least or third air movement pipe 1334, and at least one second baffle 1335.

The third storage container 1331 can be arranged adjacent to the second storage container 1321 and can have an internal space. The fifth and sixth partition walls 1332 and 1333 can be arranged in the internal space of the third storage container 1331 to divide the internal space into seventh and eighth spaces spaced apart from each other and a ninth space therebetween. At this time, the ninth space can be sealed with the seventh and eighth spaces, and the seventh space, the ninth space, and the eighth space can be placed in a row in the second direction Y.

The at least one third air movement pipe 1334 can be arranged to pass through the fifth and sixth partition walls 1332 and 1333 across the ninth space, and the seventh space can be connected to the eighth space by the third air movement pipe 1334. In one embodiment, the at least one third air movement pipe 1334 can extend in the second direction Y.

The seventh space can be connected to the fifth space of the second storage container 1321 of the heating unit 1320 by the second connection unit 1350, and the air heated by the heating unit 1320 can move to the seventh space through the second connection unit 1350, and the air in the seventh space can move to the eighth space through the third air movement pipe 1334. Meanwhile, as long as the fifth space of the second storage container 1321 can be connected to the seventh space of the third storage container 1331, a structure of the second connection unit 1350 is not limited in particular.

The ninth space can be supplied with the reformed fuel from the fuel reforming module 1200. To this end, a reformed-fuel supply pipe 1336 connecting the ninth space to the fuel reforming module 1200, for example, the reformer 1230, can be coupled to the third storage container 1331. When the reformed fuel is supplied to the ninth space, heat exchange can occur between the air moving through the third air movement pipe 1334 and the reformed fuel, and as a result, a temperature difference can be reduced between the air moving through the third air movement pipe 1334 and the reformed fuel supplied to the ninth space. At this time, the at least one second baffle 1335 can be arranged inside the ninth space to increase a length of the movement path of the reformed fuel inside the ninth space.

Meanwhile, in order to supply the air and reformed fuel with the adjusted heat balance respectively to the cathode path and the anode path inside the fuel cell stack 1100, the heat balance adjustment unit 1330 can further include an air discharge pipe 1338 connecting the eighth space to the cathode path inside the fuel cell stack 1100 and a fuel discharge pipe 1337 connecting the ninth space to the anode path inside the fuel cell stack 1100. Meanwhile, in order to ensure sufficient heat exchange between the reformed fuel and the air moving through the third air movement pipe 1334, the fuel discharge pipe 1337 can be connected to the third storage container 1331 to be relatively far away from the reformed fuel supply pipe 1336.

The combustor 1400 can be arranged under the heating unit 1320 and can combust unreacted fuel gas and air discharged from the fuel cell stack 1100. As long as unreacted fuel gas and air can be combusted, a structure of the combustor 1400 is not limited in particular.

In one embodiment, the combustor 1400 can include an outer case 1410 and a combustion device arranged inside the outer case 1410, and the combustion device can include an inner case 1420, an ignition device 1430, a fuel supply pipe 1440, and an air supply pipe 1450.

The outer case 1410 can have an internal space open to an upper portion and can be arranged at a lower portion of the second storage container 1321 such that the internal space is connected to the sixth space of the second storage container 1321 through the opening 1321a of the second storage container 1321. In one embodiment, the outer case 1410 can be coupled to the bottom of the second storage container 1321. In this case, the opening 1321a of the second storage container 1321 can expose the entire area of the internal space of the outer case 1410. As long as the outer case 1410 has an internal space open to an upper portion and can be coupled to the bottom of the second storage container 1321, a structure of the outer case 1410 is not limited in particular. In one embodiment, the outer case 1410 can include a first bottom portion spaced apart from the bottom of the second storage container 1321 and a first side wall portion extending upward from an edge portion of the first bottom portion and having an upper end coupled to the bottom of the second storage container 1321.

The inner case 1420 can be arranged inside the outer case 1410 and have an internal space that increases in area toward an upper portion and is open toward the upper portion. In one embodiment, the inner case 1420 can include a second bottom portion arranged above the first bottom portion, and a second side wall portion that extends in an inclined manner from an edge portion of the second bottom portion such that a cross-sectional area of the internal space increases toward un upper portion, and through-holes can be formed in the second side wall portion such that external air can be introduced into the internal space of the inner case 1420.

The ignition device 1430 can be arranged inside the inner case 1420 and can ignite the fuel and air supplied from the fuel supply pipe 1440 and the air supply pipe 1450. Any known ignition device can be applied as the ignition device 1430 without limitation.

The fuel supply pipe 1440 can be coupled to the inner case 1420, for example, the second bottom portion, and can supply the unreacted fuel gas discharged from the fuel cell stack 1100 to the internal space of the inner case 1420.

The air supply pipe 1450 can be coupled to the outer case 1410, for example, the first side wall portion, and can supply the unreacted air discharged from the fuel cell stack 1100 to the outer space of the inner case 1420 in the internal space of the outer case 1410. The air supplied to the internal space of the outer case 1410 can be introduced into the internal space of the inner case 1420 through the through holes formed in the second side wall of the inner case 1420.

Meanwhile, the combustor 1400 can further include a diffusion mesh net 1460 arranged on an outlet side of the fuel supply pipe 1440 to diffuse the unreacted fuel gas supplied from the fuel supply pipe 1440. In one embodiment, the diffusion mesh net 1460 can be coupled to an upper surface of the second bottom portion of the inner case 1420. The unreacted fuel gas includes a relatively low content of fuel, and when the fuel is diffused through the diffusion mesh net 1460, the fuel can be diffused over a wider area, and as a result, the combustor 1400 can generate a flame over a wider area.

The vaporizer 1500 can be arranged adjacent to the combustor 1400 below the preheating unit 1310, and can convert the water supplied from an external water supply source 300 into steam through heat exchange with the high-temperature combustion gas generated by the combustor 1400 and supplied through the third and sixth spaces of the first and second storage containers 1311 and 1321.

In one embodiment, the vaporizer 1500 can include the container 1510 and a vaporization pipe 1520.

The container 1510 can be arranged below the first storage container 1311 such that an internal space of the container 1510 is connected to the third space of the first storage container 1311 through the opening 1311a of the first storage container 1311 of the preheating unit 1310. In one embodiment, the container 1510 can be coupled to the bottom of the first storage container 1311.

In order for the high-temperature combustion gas generated by the combustor 1400 to remain in the third and sixth spaces of the first and second storage containers 1311 and 1321 for a long period of time, an area of the opening 1311a of the first storage container 1311 can be less than an area of an upper surface of the internal space of the container 1510.

In one embodiment, in order to minimize heat loss, a side wall portion of the container 1510 can be in contact with the outer case 1410 of the combustor 1400.

The vaporization pipe 1520 can be arranged inside the container 1510 and can have an inlet connected to the external water supply source 300 and an outlet connected to the mixer 1210 of the fuel reforming module 1200. The vaporization pipe 1520 can receive heat energy from the high-temperature combustion gas generated by the combustor 1400 and supplied to the inside of the container 1510 via the third and sixth spaces of the first and second storage containers 1311 and 1321, and can use this to convert water moving inside into steam.

The vaporizer 1500 can further include a central structure 1530 arranged inside the container 1510 and around which the vaporization pipe 1520 is wound to reduce heat loss.

According to the fuel cell system 1000 of the present invention, not only thermal efficiency can be improved by optimizing an arrangement of the fuel reforming module 1200, the air/fuel supply module 1300, the combustor 1400, and the vaporizer 1500, but also, because the air and reformed fuel, which are thermally balanced, are supplied to the fuel cell stack 1100 through the air/fuel supply module 1300, power generation efficiency and stability of the fuel cell stack 1100 can be significantly improved.

Although the present invention is described with reference to the preferred embodiments of the present invention, those skilled in the art will understand that the present invention can be variously modified and changed within the scope and idea of the present invention described in the following patent claims.

## Claims

1. A fuel cell system comprising:
a fuel cell stack that generates electrical energy by reacting oxygen and hydrogen;
a fuel reforming module that generates hydrogen-containing reformed fuel gas by steam-reforming hydrocarbon fuel;
a combustor that combusts unreacted fuel gas discharged from the fuel cell stack;
a vaporizer that is arranged adjacent to the combustor and converts water into steam by using the high-temperature combustion gas and supplies the steam to the fuel reforming module; and
an air/fuel supply module that heats air supplied from an external air supply source by using the high-temperature combustion gas supplied from the combustor and heat-exchanges the air with reformed fuel gas supplied from the fuel reforming module to reduce a temperature difference therebetween, and supplies the reformed fuel gas and the air after the heat exchange to the fuel cell stack,
wherein the air/fuel supply module comprises: a preheating unit that is arranged above the vaporizer and preheats the air supplied from the air supply source; a heating unit that is arranged above the combustor and heats preheated air supplied from the preheating unit by using high-temperature combustion gas supplied from the combustor; and a heat balance adjustment unit that is arranged adjacent to the heating unit and induces heat exchange between heated air supplied from the heating unit and reformed fuel gas supplied from the fuel reforming module to reduce a temperature difference therebetween, and
the preheating unit preheats air supplied from the air supply source through heat exchange with the high-temperature combustion gas provided via the heating unit.

2. The fuel cell system of claim 1, wherein the fuel reforming module includes:
a mixer that is arranged adjacent to the vaporizer and receives hydrocarbon fuel and steam respectively from an external fuel source and the vaporizer and mixes the hydrocarbon fuel with the steam;
a fuel heat exchanger that is arranged above the mixer and receives the mixed fuel gas supplied from the mixer and exchanges and heating the mixed fuel gas with unreacted fuel gas or air discharged from the fuel cell stack; and
a reformer that reforms the heated mixed fuel gas to generate the reformed fuel gas and supplies the reformed fuel gas to the air/fuel supply module.

3. The fuel cell system of claim 1, wherein
the heat balance adjustment unit includes: a third storage container having an internal space; fifth and sixth partition walls arranged inside the internal space of the third storage container to divide the internal space into a seventh space and an eighth space spaced apart from each other and a ninth space placed therebetween; and at least one third air movement pipe coupled to the fifth and sixth partition walls to be placed across the ninth space and connecting the seventh space to the eighth space,
air heated by the heating unit is supplied to the seventh space and moves to the eighth space through the third air movement pipe, and
the reformed fuel gas is supplied to the ninth space.

4. The fuel cell system of claim 3, wherein the heat balance adjustment unit further includes:
a reformed fuel supply pipe that connects the ninth space to the fuel reforming module;
a fuel discharge pipe that connects the ninth space to an anode path inside the fuel cell stack; and
an air discharge pipe that connects the eighth space to a cathode path inside the fuel cell stack.

5. The fuel cell system of claim 4, wherein
the heat balance adjustment unit further includes at least one second baffle arranged in the ninth space to increase a length of a movement path of the reformed fuel gas.

6. The fuel cell system of claim 3, wherein
the heating unit includes: a second storage container arranged adjacent to the third storage container and having an internal space; third and fourth partition walls arranged in the internal space of the second storage container to divide the internal space into a fourth space and a fifth space, which are spaced apart from each other and respectively placed adjacent to the eighth space and the seventh space and a sixth space placed therebetween and above the combustor; and at least one second air movement pipe coupled to the third and fourth partition walls to cross the sixth space and connecting the fourth space to the fifth space,
a first opening which is formed on a bottom surface of the second storage container corresponding to the sixth space and into which a flame and high-temperature combustion gas generated by the combustor are introduced, and
air preheated in the preheating unit is supplied to the fourth space, moves to the fifth space through the second air movement pipe, and is supplied to the seventh space of the third storage container.

7. The fuel cell system of claim 6, wherein
the air/fuel supply module further includes a second connection unit coupled to the second and third storage containers to connect the fifth space to the seventh space.

8. The fuel cell system of claim 6, wherein
the combustor includes an outer case open to an upper portion and a combustion device arranged inside the outer case, and
the outer case is coupled to the second storage container to connect the sixth space to the internal space by the first opening.

9. The fuel cell system of claim 6, wherein
the preheating unit includes: a first storage container arranged adjacent to the second storage container and having an internal space; first and second partition walls arranged inside the internal space of the first storage container to divide the internal space into a first space and a second space spaced apart from each other and respectively placed adjacent to the fifth space and the sixth space, and a third space placed therebetween and above the vaporizer; and at least one first air movement pipe coupled to the first and second partition walls to be placed across the third space, and connecting the first space to the second space,
air from the air supply source is supplied to the first space, moves to the second space through the first air movement pipe, and is supplied to the fourth space of the second storage container, and
the high-temperature combustion gas is supplied to the third space.

10. The fuel cell system of claim 9, wherein
the air/fuel supply module further includes a first connection unit coupled to the first and second storage containers to connect the fourth space of the second storage container to the second space of the first storage container.

11. The fuel cell system of claim 9, wherein
the air/fuel supply module further includes a third connection unit coupled to the first and second storage containers to connect the third space to the sixth space,
a second opening is formed in a bottom surface of the first storage container corresponding to the third space, and
the vaporizer includes a container having an internal space connected to the third space through the second opening, and a vaporization pipe arranged inside the container.

12. The fuel cell system of claim 11, wherein
the preheating unit further includes at least one first bevel arranged in the third space to increase a length of a movement path of the high-temperature combustion gas.

13. An air and fuel gas supply module for supplying the air and the reformed fuel gas to a fuel cell stack, the air and fuel gas supply module comprising:
a preheating unit that preheats air supplied from an air supply source;
a heating unit that is arranged above a combustor for generating high-temperature combustion gas and heats the preheated air supplied from the preheating unit by using the high-temperature combustion gas supplied from the combustor; and
a heat balance adjustment unit that is arranged adjacent to the heating unit and induces heat exchange between the heated air supplied from the heating unit and reformed fuel gas supplied from the fuel reforming module to reduce a temperature difference therebetween,
wherein the preheating unit preheats air supplied from the air supply source through heat exchange with the high-temperature combustion gas provided via the heating unit,
the heat balance adjustment unit includes: a third storage container having an internal space; fifth and sixth partition walls arranged inside the internal space of the third storage container and dividing the internal space into a seventh space and an eighth space spaced apart from each other and a ninth space placed therebetween; and at least one third air movement pipe coupled to the fifth and sixth partition walls to be placed across the ninth space and connecting the seventh space to the eighth space,
air heated by the heating unit is supplied to the seventh space and moves to the eighth space through the third air movement pipe, and
the reformed fuel gas is supplied to the ninth space.

14. The air and fuel gas supply module of claim 13, wherein the heat balance
adjustment unit further includes:
a reformed fuel supply pipe connecting the ninth space to the fuel reforming module;
a fuel discharge pipe connecting the ninth space to an anode path inside the fuel cell stack; and
an air discharge pipe connecting the eighth space to a cathode path inside the fuel cell stack.

15. The air and fuel gas supply module of claim 14, wherein
the heat balance adjustment unit further includes at least one second baffle arranged in the ninth space to increase a length of a movement path of the reformed fuel gas.

16. The air and fuel gas supply module of claim 13, wherein
the heating unit includes: a second storage container arranged adjacent to the third storage container and having an internal space; third and fourth partition walls arranged in the internal space of the second storage container to divide the internal space into a fourth space and a fifth space, which are spaced apart from each other and respectively placed adjacent to the eighth space and the seventh space and a sixth space placed therebetween and above the combustor; and at least one second air movement pipe coupled to the third and fourth partition walls to cross the sixth space and connecting the fourth space to the fifth space,
a first opening, into which a flame and high-temperature combustion gas generated by the combustor are introduced, is formed on a bottom surface of the second storage container corresponding to the sixth space and, and air preheated in the preheating unit is supplied to the fourth space, moves to the fifth space through the second air movement pipe, and is supplied to the seventh space of the third storage container.

17. The air and fuel gas supply module of claim 16, wherein
the preheating unit includes: a first storage container arranged adjacent to the second storage container and having an internal space; first and second partition walls arranged inside the internal space of the first storage container to divide the internal space into a first space and a second space spaced apart from each other and respectively placed adjacent to the fifth space and the sixth space, and a third space placed therebetween and above the vaporizer; and at least one first air movement pipe coupled to the first and second partition walls to be placed across the third space, and connecting the first space to the second space,
air from the air supply source is supplied to the first space, moves to the second space through the first air movement pipe, and is supplied to the fourth space of the second storage container, and
the high-temperature combustion gas is supplied to the third space.

18. The air and fuel gas supply module of claim 17, wherein
the preheating unit further includes at least one first bevel arranged in the third space to increase a length of a movement path of the high-temperature combustion gas.

19. The air and fuel gas supply module of claim 17, further comprising:
a first connection unit coupled to the first and second storage containers to connect the fourth space of the second storage container to the second space of the first storage container;
a second connection unit coupled to the second and third storage containers to connect the fifth space to the seventh space; and
a third connection unit coupled to the first and second storage containers to connect the third space to the sixth space.

20. The air and fuel gas supply module of claim 18, wherein
a second opening that connects an internal space of a container of the vaporizer to the third space is formed on a bottom surface of the first storage container corresponding to the third space.
